# FASCICULE DE BREVET EUROPEEN

(11) **EP 1 790 427 B1**
(45) Date de publication et mention de la délivrance du brevet: **24.12.2008**
(21) Numéro de dépôt: 06301154.8
(22) Date de dépôt: 17.11.2006
(51) Int. Cl.: B23K 26/38, B23K 26/40, B23K 26/14

(54) **Procédé de coupage d'une pièce en acier C-Mn à l'aide d'une fibre contenant de l'ytterbium**
Verfahren zum Laserschneiden eines Werkstückes in Stahl C-Mn mit einer Ytterbium enthaltenden Faser
Process of cutting by a laser beam a workpiece in Steel C-Mn using a fibre containing ytterbium

(30) Priorité: 25.11.2005 FR 0553605
(43) Date de publication de la demande: 30.05.2007
(73) Titulaire: L'AIR LIQUIDE, Société Anonyme pour l'Etude et l'Exploitation des Procédés Georges Claude, 75007 Paris (FR); AIR LIQUIDE WELDING FRANCE, 75007 Paris (FR)
(72) Inventeur: Chouf, Karim, 92300 Levallois Perret (FR); Maazaoui, Hakim, 95800 Cergy St Christophe (FR); Briand, Francis, 75009 Paris (FR)
(74) Mandataire: Pittis, Olivier

(56) Documents cités:
- WO-A-20/05074573
- US-A1- 2003 209 049
- US-A1- 2005 041 697
- US-A1- 2005 169 326
- US-B1- 6 208 458

## Description

L'invention porte sur un procédé de coupage par faisceau laser d'acier carbone-manganèse (C-Mn) utilisant une source laser de type fibre à base d'ytterbium conformément au préambule de la revendication 1 (voir, par example, US 2003/209049 A1).

Le coupage par faisceau laser en utilisant une source laser de type CO₂ pour générer un faisceau laser de longueur d'onde égale à 10.6 µm et d'une puissance allant jusqu'à 6 kW actuellement, est largement répandu dans l'industrie.

Ce procédé est notamment utilisé pour le coupage des aciers C-Mn. Dans le cadre de l'invention, on entend par « acier C-Mn» tout acier non-allié ou faiblement allié dont les teneurs en carbone et en manganèse sont inférieures à 2% en poids et les teneurs en les autres éléments d'alliage éventuellement présents sont inférieures à 5% en poids.

Cependant, les vitesses de coupe qui peuvent être atteintes et la qualité de coupe qui en résulte sont très variables selon le matériau à couper et, par ailleurs, selon les paramètres du procédé de coupage adoptés, tels que nature du gaz d'assistance, diamètre du faisceau focalisé et puissance du laser incidente...

Ainsi, les laser de type CO₂ ne peuvent être utilisés avec des gaz d'assistance possédant un potentiel d'ionisation faible, tels que l'argon par exemple, sous risque de générer des plasmas parasites qui peuvent nuire au procédé.

En outre, les laser de type CO₂ sont limités en puissance, ce qui impacte directement la vitesse de coupe.

De plus, le fait de devoir guider le faisceau laser depuis le générateur laser jusqu'à la tête de focalisation, c'est-à-dire la tête de coupe, présente des inconvénients, notamment au niveau de l'alignement des optiques du chemin optique. En effet, les optiques de guidage sont généralement des miroirs en cuivre poli et/ou revêtu et leur position déterminent le chemin emprunté par le faisceau laser. De ce fait, l'alignement des miroirs doit être parfait pour assurer une entrée optimale du faisceau laser dans la tête de focalisation ou tête de coupe. Or, le réglage de la position de ces miroirs est généralement assuré par des moyens mécaniques, qui peuvent facilement se dérégler en fonction de l'usure des pièces et des conditions environnementales, tel que la température ambiante, le taux d'humidité...

De plus, le chemin optique du faisceau doit aussi impérativement être maintenu dans une atmosphère inerte pour éviter toute pollution et conservé un milieu d'indice optique constant nécessaire à la bonne propagation du faisceau. Ces conditions permettent en effet de conserver les propriétés relatives au diamètre du faisceau et à la répartition transversale de l'énergie dans ce dernier, ainsi que des propriétés de qualité du faisceau satisfaisantes pour le procédé ; le facteur de qualité (BPP) des faisceaux laser CO₂ de forte puissance mis en oeuvre en découpe étant généralement compris entre 3 mm.mrad et 6 mm.mrad. Une telle atmosphère permet aussi de préserver les optiques de guidage et éviter leur détérioration.

Ceci n'est cependant pas pratique au plan industriel car cela complexifie l'installation et engendre des coûts supplémentaires.

Pour tenter de pallier ces problèmes, il a été proposé de réaliser la découpe avec un dispositif laser de type Nd:YAG au sein duquel le faisceau est généré par un résonateur contenant un milieu amplificateur solide, à savoir un barreau de néodyme (Nd), puis convoyé ensuite jusqu'à la tête de focalisation, via une fibre optique.

Cependant, cette solution n'est pas non plus satisfaisante au plan industriel.

Plus précisément, il a été constaté qu'une découpe par faisceau laser issu d'une source laser de type Nd:YAG de longueur d'onde de 1.06 µm donne de mauvais résultats en termes de qualité et de vitesse de découpe, en particulier lors du coupage d'une pièce en acier C-Mn,

En effet, les lasers Nd :YAG ont des facteurs de qualité (BPP) inadaptés au processus de découpe laser puisque ceux-ci sont de l'ordre de 15 mm.mrad à 30 mm.mrad selon les sources laser.

Or, il faut savoir que plus le facteur de qualité d'un laser est élevé, plus le produit du diamètre de faisceau focalisé et de la divergence du faisceau est grand et donc moins le faisceau laser est efficace pour le processus de découpe laser.

De plus, la répartition transversale de l'énergie dans un faisceau laser Nd :YAG focalisé n'est pas gaussienne mais en créneau (appelé « *top hat »* en anglais) ; au-delà du point de focalisation, la répartition transversale de l'énergie est aléatoire.

On comprend donc immédiatement les limites de l'utilisation des laser Nd :YAG en coupage laser, en particulier d'acier C-Mn.

D'une façon plus générale, le coupage laser d'une pièce en acier C-Mn avec des laser Nd :YAG est loin d'être évident lorsqu'on souhaite atteindre des vitesses et une qualité de coupe acceptables au plan industriel.

Ainsi, le document US-A-2003/0209049 enseigne un procédé de coupage de pièces en acier C-Mn avec un laser Nd:YAG.

Par ailleurs, le document US-A-2005/0169326 propose un système pour générer une radiation laser, notamment au moyen d'une fibre dopée à l'ytterbium. En outre, le document US-A-2005/0041697 décrit, de manière générale, un dispositif laser portatif de coupage pouvant comprendre un générateur laser de type CO₂, Nd:YAG, solide ou à fibre Yb.

Le problème qui se pose est alors de proposer un procédé industriellement acceptable de découpe par faisceau laser des aciers C-Mn amélioré, lequel puisse permettre d'atteindre, selon l'épaisseur considérée, des vitesses allant jusqu'à 15 à 20 m/min, voire plus élevées, et une bonne qualité de coupe, c'est-à-dire des faces de coupe droites, sans bavure, avec une rugosité limitée...

La solution de l'invention est alors un procédé de coupage par faisceau laser d'une pièce en acier C-Mn, conformément à la revendication 1.

Les moyens de génération de faisceau laser comprennent au moins un élément excitateur, de préférence plusieurs éléments excitateurs, coopérant avec au moins un élément excité, encore appelé milieu amplificateur, pour générer le faisceau laser. Les éléments excitateurs sont préférentiellement plusieurs diodes laser, alors que le ou les éléments excités est ou sont des fibres, de préférence en silice, à coeur dopé à l'ytterbium.

En outre, dans le cadre de l'invention, on utilisera indifféremment les termes « moyens de génération de faisceau laser » et « résonateur ».

Selon le cas, le procédé de l'invention peut comprendre l'une ou plusieurs des caractéristiques suivantes :
- la (ou les) fibre(s) est formée d'un coeur dopé à l'ytterbium recouvert de silice.
- le faisceau laser généré par la fibre à base d'ytterbium a une longueur d'onde entre 1 et 5 µm, de préférence entre 1.04 et 3 µm.
- le faisceau laser généré par la fibre à base d'ytterbium a une longueur d'onde entre 1.07 et 1.1 µm, de préférence égale à 1.07 µm.
- le faisceau laser a une puissance comprise entre 0.1 et 25 kW, de préférence entre 0.5 et 15 kW.
- le faisceau laser est continu ou pulsé, de préférence continu.
- la pièce à couper à une épaisseur entre 0.25 et 30 mm, de préférence entre 0.40 et 20 mm.
- la vitesse de coupe est comprise entre 0.1 et 20 m/min, de préférence de 1 à 15 m/min.
- le gaz d'assistance du faisceau laser est choisi parmi l'azote, l'hélium, l'argon, l'oxygène, le CO₂ et leurs mélanges, et éventuellement, il contient, en outre, un ou plusieurs composés additionnels choisis parmi H₂ et CH₄.
- le facteur de qualité du faisceau laser est compris entre de préférence 1 et 8 mm.mrad, de préférence supérieur à 2 mm.mrad, de préférence encore supérieur à 3 mm.Mrad, et/ou de préférence inférieur à 7 mm.mrad, de préférence encore inférieur à 5 mm.Mrad.
- la vitesse de découpe d'une pièce en acier d'une épaisseur comprise entre 0.4 mm et 3 mm, en utilisant de l'oxygène comme gaz d'assistance à une pression comprise entre 0.2 et 6 bar, est comprise entre 6 et 15 m/min.
- la vitesse de découpe d'une pièce en acier d'une épaisseur comprise entre 3 mm et 6 mm, en utilisant de l'oxygène comme gaz d'assistance à une pression comprise entre 0.2 et 6 bar, est comprise entre 2 et 6 m/min.
- la vitesse de découpe d'une pièce en acier d'une épaisseur comprise entre 6 mm et 10 mm, en utilisant de l'oxygène comme gaz d'assistance à une pression comprise entre 0.2 et 6 bar, est comprise entre 1 et 3 m/min.
- la vitesse de découpe d'une pièce en acier d'une épaisseur comprise entre 10 mm et 20 mm, en utilisant de l'oxygène comme gaz d'assistance à une pression comprise entre 0.2 et 6 bar, est comprise entre 0,1 et 2 m/min.
- plus généralement, la pression de gaz d'assistance est comprise entre environ 0,1 bar et 10 bar, et est choisie en fonction de l'épaisseur à couper.
- le diamètre de l'orifice d'injection du gaz est compris entre 0,5 et 5 mm, typiquement entre 1 et 3 mm.

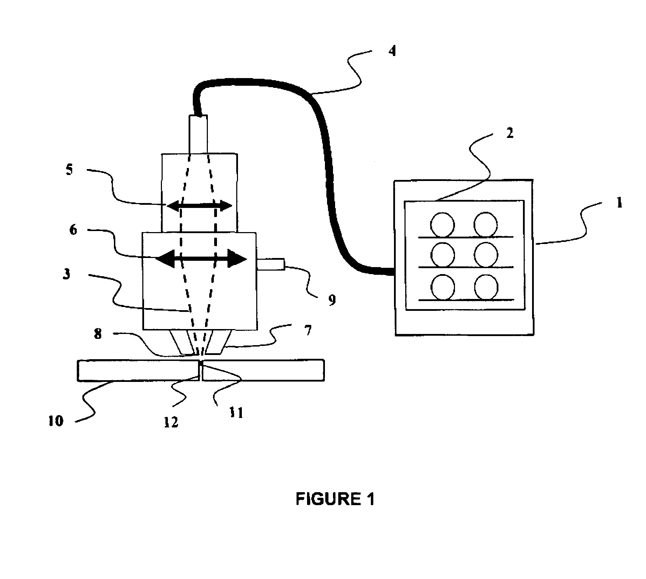

La Figure 1 ci-annexée est un schéma de principe d'une installation de mise en oeuvre d'un procédé de coupage par faisceau laser 3 d'une pièce 10 en acier C-Mn, mettant en oeuvre une source laser 1 à résonateur 2 ou moyens de génération de faisceau laser comprenant une fibre en silice à coeur dopé à l'ytterbium pour générer le faisceau laser 3.

La source laser 1 permet de générer un faisceau laser 3 de longueur d'onde comprise entre 1 µm et 5 µm, plus précisément à 1.07 µm.

Le faisceau 3 se propage à travers des moyens de convoyage de faisceau 4, telle qu'une fibre optique en silice fondue de diamètre compris 20 µm et 300 µm, jusqu'à la zone d'interaction 11 entre le faisceau 3 et la pièce 10 où le faisceau va frapper la pièce en acier C-Mn et fondre le matériau constitutif de ladite pièce en formant ainsi la saignée de coupe,.

En sortie de cette fibre 4, le faisceau laser 3 possède des caractéristiques optiques particulières et un facteur de qualité (BPP) compris entre 1 et 8 mm.mrad. Le faisceau 3 est ensuite collimaté avec un collimateur optique 5 équipé d'un doublet de collimation en silice fondu revêtue de manière à limiter la divergence du faisceau en sortie de fibre et le rendre le faisceau laser parallèle.

Le faisceau 3 parallèle, dont la divergence a été considérablement limitée par le collimateur, est ensuite focalisé sur ou dans la pièce 10 à couper par une lentille 6 en silice fondue revêtue de longueur focale comprise entre 80 mm et 510 mm, de préférence entre 100 mm et 250 mm.

Avant de venir frapper la pièce 10, le faisceau 3 traverse axialement la tête laser 5 équipée d'une buse 7 comprenant un orifice 8 de sortie axial situé en regard de la pièce à couper 10 par lequel passent le faisceau 3 et le gaz d'assistance. L'orifice de la buse peut être compris entre 0.5 mm et 5 mm, de préférence entre 1 mm et 3 mm.

La tête laser 5 est alimentée, quant à elle, en gaz d'assistance via une entrée 9 de gaz, par exemple un gaz inerte tel l'azote, l'argon, l'hélium ou un mélange de plusieurs de ces gaz, ou alors un gaz actif, tel l'oxygène par exemple, voire des mélanges de gaz actif et de gaz inerte.

Le gaz d'assistance sous pression sert à évacuer le métal en fusion hors de la saignée 12 de coupe se formant dans la pièce 10, lors du déplacement relatif de la pièce par rapport à la tête laser 5 selon la trajectoire de coupe désirée. La solution inverse consistant à bouger la tête de coupe en conservant la pièce statique conduit au même résultat.

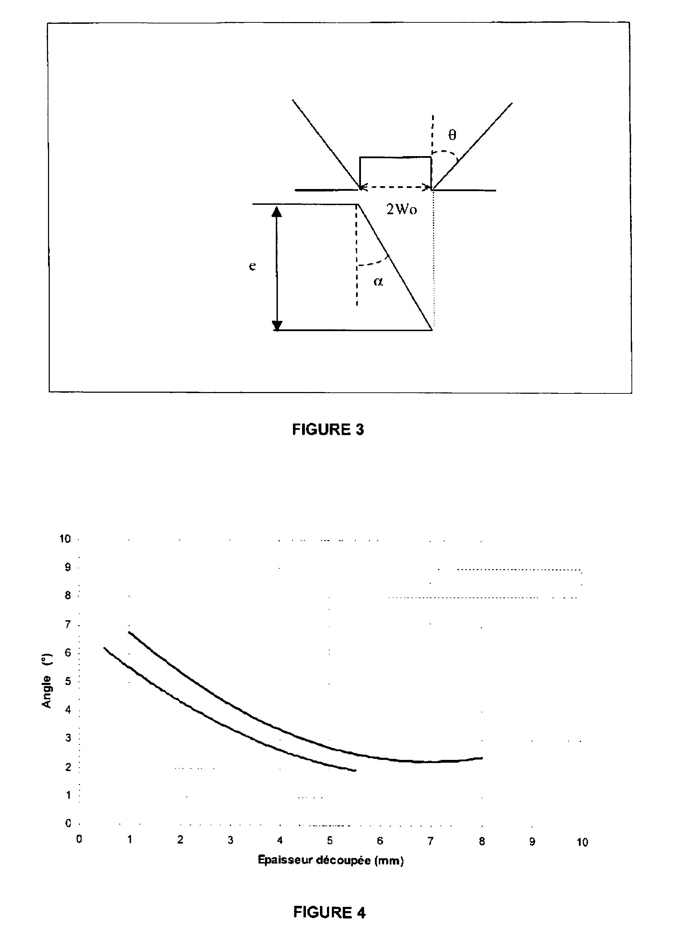

La Figure 3 est un schéma illustratif de la configuration en cours de coupage au niveau de la saignée de coupe (matériau d'épaisseur e), où ont été représentés l'angle θ de divergence du faisceau laser après focalisation, le diamètre 2Wo du faisceau focalisé et l'angle α du front avant de coupe.

Le facteur de qualité du faisceau où BPP est défini comme étant le produit de l'angle θ de divergence par son rayon Wo.

Le processus de coupage est régi par l'absorption de l'énergie du faisceau laser dans le matériau au cours de la coupe. En fonction de la longueur d'onde du faisceau laser mis en oeuvre, il existe donc un angle optimal d'absorption de l'énergie par le matériau. En dehors de cet angle optimal, une part de l'énergie est reflétée et/ou perdue.

La Figure 3 illustre le fait qu'en condition optimale de coupe l'angle du front avant α correspond à une exposition de toute l'épaisseur e du matériau sous le faisceau de diamètre 2Wo.

La Figure 4 montre l'évolution de l'angle α optimum du front avant en fonction de l'épaisseur de coupe. La courbe supérieure correspond à celle obtenue avec un laser CO₂ de 4 kW en mode Tem 01*, alors que la courbe inférieure à celle obtenue avec un laser à fibre d'ytterbium de 2kW selon l'invention. Les deux courbes ne sont pas confondues du fait de la différence d'angle d'absorption optimal de l'énergie à 10.6 µm, qui est la longueur d'onde du laser CO₂, et à 1.07µm, qui est la longueur d'onde du laser fibre à ytterbium.

Au vu de ces courbes, il apparaît clairement que pour les faibles épaisseurs, l'angle optimal du front avant est plus important que pour des épaisseurs plus importantes. L'angle maximal de transmission de l'énergie laser à la matière est obtenu géométriquement et est la somme des angles α+ θ.

On comprend alors que, lorsqu'on coupe des épaisseurs minces (quelques mm), il convient d'utiliser un angle de divergence de faisceau faible, c'est à dire un BPP petit, puisque le diamètre de spot est fixé par le diamètre de fibre utilisé, et ce, pour maintenir l'angle optimum d'absorption de l'énergie constant.

On en déduit aussi qu'au-delà d'une valeur de 8 mm.mrad, la transmission de l'énergie du faisceau à la matière devient moins efficace.

De là, dans le cadre de l'invention, on met en oeuvre un faisceau laser dont le facteur de qualité est préférentiellement compris entre 1 et 8 mm.mrad, de préférence entre 2 et 8 mm.mrad.

### Exemple

Afin de démontrer l'efficacité du procédé de l'invention, plusieurs essais de coupage de pièces en acier C-Mn ont été réalisés en utilisant un résonateur pour générer le faisceau laser contenant un milieu amplificateur composé de fibres optiques en silice dont le coeur est dopé à l'ytterbium excitées par des diodes selon le procédé de l'invention. Les résultats de ces essais sont donnés dans l'exemple ci-après.

Plus précisément, la source laser utilisée dans l'Exemple ci-après est composée d'un milieu amplificateur formé de fibres en silice dopées à l'ytterbium, de puissance 2kW et de longueur d'onde égale à 1.07 µm, propagé dans une fibre optique de 100 µm en silice fondu revêtue, possédant un facteur de qualité (BPP) en sortie de fibre de 4mm.mrad. Le collimateur situé en sortie de fibre est équipé d'un doublet de 55 mm de longueur focale.

Pour déterminer les plages de vitesses pouvant être atteintes avec le procédé de l'invention en fonction de l'épaisseur des pièces à couper, et de la pression et de la composition du gaz d'assistance mises en oeuvre, des essais de découpe ont été réalisés sur des pièces en acier C-Mn ayant des épaisseurs comprises entre 2 mm et 20 mm.

Le gaz utilisé est injecté dans la zone d'interaction du faisceau avec la pièce à des pressions variables comprises entre 0.6 et 20 bar selon le gaz utilisé, à travers des buses de découpe laser présentant des orifices de diamètres compris entre 0.5 et 3 mm selon le cas.

Lorsqu'on utilise un gaz actif, tel l'oxygène, on travaille à une pression de 0.2 à 6 bar, alors qu'avec un gaz inerte, tel l'azote, des pressions plus élevées sont généralement nécessaires, à savoir des pressions de l'ordre de 8 à 20 bar. Bien entendu, des pressions intermédiaires peuvent être mises en oeuvre avec des mélanges de gaz inerte et actif, par exemple avec des mélanges d'oxygène et d'azote, voire avec de l'air.

Dans le cas présent, les essais ont été réalisés avec de l'oxygène à des pressions comprises entre 0.4 bar et 1 bar, typiquement de 0,7 bar, pour des buses de diamètre de 1 mm à 2.5 mm. Plus l'épaisseur à couper est importante, plus le diamètre de buse à utiliser est grand, le choix du diamètre à retenir étant fait empiriquement en réalisant des tests de routine.

On a utilisé des lentilles de focalisation de longueur focale comprise entre 127 mm et 190.5 mm pour focaliser le faisceau laser généré par un résonateur à fibres dopées à l'ytterbium. Plus précisément, une épaisseur de 2 mm a été coupée avec une lentille de focale de 127 mm et les autres épaisseurs avec une focale de 190.5 mm. Ce faisceau est acheminé jusqu'à la lentille de focalisation de la tête de coupe par des moyens de convoyage optique, telle une fibre optique de 100 µm de diamètre.

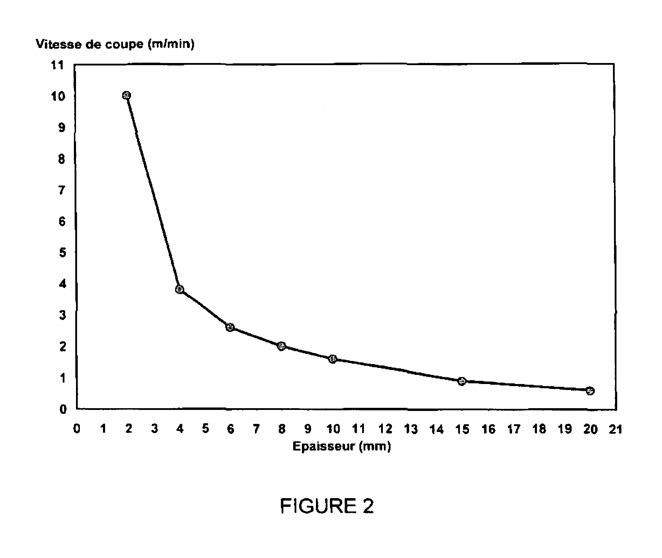

Les résultats obtenus ont été consignés sur la Figure 2 ci-jointe où l'on a représenté la vitesse obtenue (axe des ordonnées) en fonction de l'épaisseur à découper (axe des abscisses).

On voit que, sur une tôle de 2 mm d'épaisseur, dans les conditions ci-dessus, une vitesse de 10 m/min a été atteinte et que, de manière logique, la vitesse de coupe décroît avec une augmentation de l'épaisseur du matériau découpé.

Par ailleurs, il faut souligner qu'après examen visuel, pour toutes les épaisseurs de coupe comprises entre 2 et 15 mm, la qualité de coupe, en termes de bavure, liseré d'oxydes et striations, a été jugée très satisfaisante d'un point de vue industriel. L'épaisseur maximale découpée dans ces conditions et donnant de bons résultats est de l'ordre 20 mm.

Autrement dit, le procédé de l'invention a démontré son efficacité en termes de vitesse de découpe et de qualité de coupe, en particulier pour les épaisseurs inférieures à 20 mm.

## Revendications

1. Procédé de coupage par faisceau laser d'une pièce (10) en acier C-Mn, **caractérisé en ce qu'**on utilise des moyens (1, 2) de génération de faisceau laser (3) comprenant au moins une fibre contenant de l'ytterbium pour générer le faisceau laser (3) et **en ce que** le facteur de qualité du faisceau laser est compris entre 0,33 et 8 mm.mrad.

2. Procédé selon la revendication 1, **caractérisé en ce que** la fibre est formée d'un coeur dopé à l'ytterbium recouvert de silice.

3. Procédé selon l'une des revendications 1 ou 2, **caractérisé en ce que** le faisceau laser (3) généré par la fibre à base d'ytterbium a une longueur d'onde entre 1 et 5 µm, de préférence entre 1.04 et 3 µm.

4. Procédé selon l'une des revendications 1 à 3, **caractérisé en ce que** le faisceau laser (3) généré par la fibre à base d'ytterbium a une longueur d'onde entre 1.07 et 1.1 µm, de préférence de 1.07 µm.

5. Procédé selon l'une des revendications 1 à 4, **caractérisé en ce que** le faisceau laser (3) a une puissance comprise entre 0.1 et 25 kW, de préférence entre 0.5 et 15 kW.

6. Procédé selon l'une des revendications 1 à 5, **caractérisé en ce que** le faisceau laser (3) est continu ou pulsé, de préférence continu

7. Procédé selon l'une des revendications 1 à 6, **caractérisé en ce que** la pièce (10) à couper à une épaisseur entre 0.25 et 30 mm, de préférence entre 0.40 et 20 mm.

8. Procédé selon l'une des revendications 1 à 7, **caractérisé en ce que** la vitesse de coupe est comprise entre 0.1 et 20 m/min, de préférence de 1 à 15 m/min.

9. Procédé selon l'une des revendications 1 à 8, **caractérisé en ce que** le gaz d'assistance du faisceau laser (3) est choisi parmi l'azote, l'hélium, l'argon, l'oxygène, le CO₂ et leurs mélanges, et éventuellement, il contient, en outre, un ou plusieurs composés additionnels choisis parmi H₂ et CH₄.

10. Procédé selon l'une des revendications 1 à 9, **caractérisé en ce que** le facteur de qualité du faisceau laser (3) est compris entre 1 et 8 mm.mrad, de préférence supérieur à 2 mm.mrad, de préférence encore supérieur à 3 mm.Mrad, et/ou de préférence inférieur à 7 mm.mrad, de préférence encore inférieur à 5 mm.Mrad.

## Claims

1. Laser cutting process for cutting a C-Mn steel workpiece (10), **characterized in that** means (1, 2) for generating a laser beam (3) that comprise at least one ytterbium-containing fibre for generating the laser beam (3) are used and **in that** the quality factor of the laser beam is between 0.33 and 8 mm.mrad.

2. Process according to Claim 1, **characterized in that** the fibre is formed from an ytterbium-doped core clad with silica.

3. Process according to either of Claims 1 and 2, **characterized in that** the laser beam (3) generated by the ytterbium-based fibre has a wavelength between 1 and 5 µm, preferably between 1.04 and 3 µm.

4. Process according to one of Claims 1 to 3, **characterized in that** the laser beam (3) generated by the ytterbium-based fibre has a wavelength between 1.07 and 1.1 µm, preferably of 1.07 µm.

5. Process according to one of Claims 1 to 4, **characterized in that** the laser beam (3) has a power of between 0.1 and 25 kW, preferably between 0.5 and 15 kW.

6. Process according to one of Claims 1 to 5, **characterized in that** the laser beam (3) is a continuous or pulsed laser beam, preferably a continuous laser beam.

7. Process according to one of Claims 1 to 6, **characterized in that** the workpiece (10) to be cut has a thickness between 0.25 and 30 mm, preferably between 0.40 and 20 mm.

8. Process according to one of Claims 1 to 7, **characterized in that** the cutting speed is between 0.1 and 20 m/min, preferably from 1 to 15 m/min.

9. Process according to one of Claims 1 to 8, **characterized in that** the assistance gas for the laser beam (3) is chosen from nitrogen, helium, argon, oxygen, CO₂ and mixtures thereof, and, optionally, it further contains one or more additional compounds chosen from H₂ and CH₄.

10. Process according to one of Claims 1 to 9, **characterized in that** the quality factor of the laser beam (3) is between 1 and 8 mm.mrad, preferably greater than 2 mm.mrad, even more preferably greater than 3 mm.mrad and/or preferably less than 7 mm.mrad and even more preferably less than 5 mm.mrad.

## Patentansprüche

1. Verfahren zum Laserschneiden eines Werkstücks (10) aus C-Mn-Stahl, **dadurch gekennzeichnet, dass** Mittel (1, 2) zum Erzeugen eines Laserstrahls (3) verwendet werden, die mindestens eine Faser umfassen, die Ytterbium enthält, um den Laserstrahl (3) zu erzeugen, und **dadurch**, dass der Qualitätsfaktor des Laserstrahls im Bereich zwischen 0,33 und 8 mm.mrad liegt.

2. Verfahren nach Anspruch 1, **dadurch gekennzeichnet, dass** die Faser aus einem Kern gebildet ist, der mit Ytterbium dotiert, das mit Siliciumdioxid überzogen ist.

3. Verfahren nach einem der Ansprüche 1 oder 2, **dadurch gekennzeichnet, dass** der Laserstrahl (3), der von der Faser auf Ytterbium-Basis gebildet wird, eine Wellenlänge zwischen 1 und 5 µm, bevorzugt zwischen 1,04 et 3 µm aufweist.

4. Verfahren nach einem der Ansprüche 1 bis 3, **dadurch gekennzeichnet, dass** der Laserstrahl (3), der von der Faser auf Ytterbium-Basis gebildet wird, eine Wellenlänge zwischen 1,07 und 1,1 µm, bevorzugt 1,07 µm aufweist.

5. Verfahren nach einem der Ansprüche 1 bis 4, **dadurch gekennzeichnet, dass** der Laserstrahl (3) eine Leistung im Bereich zwischen 0,1 und 25 kW, bevorzugt zwischen 0,5 und 15 kW aufweist.

6. Verfahren nach einem der Ansprüche 1 bis 5, **dadurch gekennzeichnet, dass** der Laserstrahl (3) kontinuierlich oder gepulst, bevorzugt kontinuierlich ist.

7. Verfahren nach einem der Ansprüche 1 bis 6, **dadurch gekennzeichnet, dass** das zu schneidende Werkstück (10) eine Dicke zwischen 0,25 und 30 mm, bevorzugt zwischen 0,40 und 20 mm aufweist.

8. Verfahren nach einem der Ansprüche 1 bis 7, **dadurch gekennzeichnet, dass** die Schnittgeschwindigkeit im Bereich zwischen 0,1 und 20 m/min, bevorzugt zwischen 1 und 15 m/min liegt.

9. Verfahren nach einem der Ansprüche 1 bis 8, **dadurch gekennzeichnet, dass** das Prozessgas des Laserstrahls (3) aus Stickstoff, Helium, Argon, Sauerstoff, CO₂ und deren Gemischen ausgewählt ist, und gegebenenfalls ferner ein oder mehrere zusätzliche Verbindungen enthält, ausgewählt aus H₂ und CH₄.

10. Verfahren nach einem der Ansprüche 1 bis 9, **dadurch gekennzeichnet, dass** der Qualitätsfaktor des Laserstrahls (3) im Bereich zwischen 1 und 8 mm.mrad liegt, bevorzugt größer als 2 mm.mrad, stärker bevorzugt größer als 3 mm.mrad, und/oder bevorzugt kleiner als 7 mm.mrad, stärker bevorzugt kleiner als 5 mm.mrad ist.
